# EUROPÄISCHE PATENTSCHRIFT

(11) **EP 0 886 834 B1**
(45) Veröffentlichungstag und Bekanntmachung des Hinweises auf die Patenterteilung: **03.11.2004**
(21) Anmeldenummer: 97915335.0
(22) Anmeldetag: 04.03.1997
(51) Int. Cl.: G06K 19/077

(54) **CHIPKARTE UND VERFAHREN ZUR HERSTELLUNG EINER CHIPKARTE**
SMART CARD AND PROCESS FOR MANUFACTURING A SMART CARD
CARTE A PUCE ET PROCEDE DE FABRICATION D'UNE CARTE A PUCE

(30) Priorität: 12.03.1996 DE 19609636
(43) Veröffentlichungstag der Anmeldung: 30.12.1998
(73) Patentinhaber: Infineon Technologies AG, 81669 München (DE)
(72) Erfinder: FRIES, Manfred, D-94336 Hunderdorf (DE); JANCZEK, Thies, D-93055 Regensburg (DE)
(74) Vertreter: Epping, Hermann, Fischer
(86) Internationale Anmeldenummer: PCT/DE1997/000409
(87) Internationale Veröffentlichungsnummer: WO 1997/034255

(56) Entgegenhaltungen:
- EP-A- 0 671 705
- EP-A- 0 682 321
- DE-A- 4 431 603

## Beschreibung

Die Erfindung bezieht sich auf eine Kontaktlose Chipkarte und ein Verfahren zur Herstellung einer solchen Chipkarte.

Aus der EP A-671705 und der EP A-682 321 sind kontaktlose Chipkarten bekannt, wobei auf dem Kartenkörper ein Koppelelement, welches Leiterbahn und Kontaktanschlüsse aufweist, ausgebildet ist. Ein Halbleiterchip ist dabei auf einem Träger angeordnet, wobei Halbleiterchip und Träger zusammen ein Modul bilden, wobei das Modul zusätzliche Kontakte aufweist, die zur Kontaktierung mit dem Koppelelement dienen.

Weiterhin ist aus den beiden zuvor genannten Dokumenten ein Verfahren bekannt, bei dem in einer kontaktlosen Chipkarte, die aus einem Kartenkörper besteht, der Kartenkörper ein Koppelelement aufweist, welches Leiterbahnen und Kontaktanschlüsse aufweist. Es wird ein integrierter Schaltkreis zunächst auf einem Träger montiert, der Kontakte aufweist, um eine Verbindung mit dem Koppelelement herzustellen. Mit diesen Kontakten werden Anschlüsse des Halbleiterchips verbunden. Sodann wird dieses sogenannte Modul in einer Öffnung des Kartenkörpers eingesetzt.

Die Anwendungsmöglichkeiten von in der Regel im Scheckkartenformat ausgebildeten Chipkarten sind aufgrund einer hohen funktionalen Flexibilität äußerst vielseitig geworden und nehmen mit der steigenden Rechenleistung und Speicherkapazität der verfügbaren integrierten Schaltungen weiterhin zu. Neben den derzeit typischen Anwendungsfeldern solcher Chipkarten in der Form von Krankenversichertenkarten, Gleitzeiterfassungskarten, Telefonkarten ergeben sich zukünftig insbesondere Anwendungen im elektronischen Zahlungsverkehr, bei der Zugriffskontrolle auf Rechner, bei geschützten Datenspeichern und dergleichen. Hinsichtlich der Art der Kopplung an ein Terminal bzw. ein Lesegerät unterscheidet man kontaktbehaftete Chipkarten und sogenannte kontaktlose Chipkarten. Bei einer kontaktbehafteten Chipkarte erfolgt die Kontaktierung durch ein metallisches Kontaktfeld mit üblicherweise nach einem ISO-Standard normierter Kontaktelemente. Die Zuverlässigkeit von Chipkarten mit Kontakten konnte zwar aufgrund der steigenden Produktionserfahrung der Hersteller in den vergangenen Jahren stetig verbessert werden, so daß zum Beispiel die Ausfallquote von Telefonkarten über eine Lebensdauer von einem Jahr heute deutlich unter ein Promille liegt. Nach wie vor sind jedoch Kontakte eine der häufigsten Fehlerquellen in elektromechanischen Systemen. Störungen können zum Beispiel durch Verschmutzung oder Abnutzung der Kontakte entstehen. Beim Einsatz in mobilen Geräten können Vibrationen zu kurzzeitigen Kontaktunterbrechungen führen. Da die Kontakte auf der Oberfläche der Chipkarte direkt mit den Eingängen der integrierten Schaltung verbunden sind, besteht darüber hinaus die Gefahr, daß elektrostatische Entladungen die integrierte Schaltung im Innern der Karte schwächen oder gar zerstören können. Diese technischen Probleme werden von der kontaktlosen Chipkarte umgangen. Neben diesen technischen Vorteilen bietet die kontaktlose Chipkarte darüber hinaus eine Reihe interessanter neuer Möglichkeiten in der Anwendung für den Kartenherausgeber und den Kartenbenutzer. So müssen kontaktlose Chipkarten zum Beispiel nicht unbedingt in einen Kartenleser eingesteckt werden, sondern es gibt Systeme, die über eine Entfernung von bis zu einem Meter funktionieren. Ein breites Anwendungsgebiet stellt beispielsweise der öffentliche Personennahverkehr dar, wo in möglichst kurzer Zeit möglichst viele Personen erfaßt werden müssen. Neben weiteren Vorteilen bietet die kontaktlose Chipkarte den Vorzug, daß keine technischen Elemente an der Kartenoberfläche sichtbar sind, so daß die optische Gestaltung der Kartenoberfläche nicht durch Magnetstreifen oder Kontaktflächen eingeschränkt wird. Die Nachteile bei den derzeit verfügbaren kontaktlosen Chipkarten liegen vor allem in den zusätzlichen Bauelementen wie Übertragungsspulen oder Kondensatorplatten, die in die Karte zu integrieren sind. Dies führt dazu, daß bis heute die Herstellung von kontaktlosen Chipkarten deutlich teurer ist als die vergleichbarer Karten mit Kontakten. Darüber hinaus ist die in der kontaktlosen Chipkarte erforderliche Elektronik zur kontaktlosen Übertragung von elektrischen Signalen an das Terminal aufwendiger. Im Prinzip geeignet hierfür sind Schaltungen, die eine Signalübertragung mittels Mikrowellen, optischer Signale, kapazitiver oder induktiver Kopplung ermöglichen, wobei sich wegen der flachen Bauform der Chipkarte am ehesten die kapazitive und die induktive Kopplung eignen. Derzeit erfolgt bei den meisten kontaktlosen Karten die Übertragung auf induktivem Wege, mit dem sich sowohl die Daten wie auch die Energieübertragung realisieren lassen. So sind im Kartenkörper als Koppelelemente eine oder mehrere Induktionsspulen integriert ausgebildet. Die Übertragung von elektrischen Signalen erfolgt nach dem Prinzip des lose gekoppeiten Transformators, wobei die Trägerfrequenz beispielsweise im Bereich zwischen 100 und 300 kHz oder bei einigen MHz, insbesondere der Industriefrequenz von 13,56 MHz liegt. Hier für werden Induktionsspulen mit einem gegenüber der Grundfläche des Halbleiterchips von in der Größenordnung etwa 10 mm² . wesentlich größeren Spulenflächen von typischerweise etwa 30 bis 40 cm² benötigt, wobei die Induktionsspulen auf geeignete Weise mit der auf dem Halbleiterchip befindlichen Schaltung kontaktiert werden müssen. Hierbei werden die Halbleiterbauelemente in Form von vorgefertigten Modulen oder direkt als Chip auf die geätzte Spule montiert. Anschließend wird das als separates Bauteil vorliegende Chipmodul samt der in der Regel nur wenige Windungen aufweisenden und flach ausgebildeten Induktionsspule zur Fertigstellung der Chipkarte in den Kartenkörper einlaminiert, wobei für den Volumenausgleich beim Laminieren gegebenenfalls mit Ausstanzungen versehene Zwischenfolien als Inlettfolien eingebracht werden.

Der Erfindung liegt die Aufgabe zugrunde, eine kontaktlose Chipkarte und ein Verfahren zur Herstellung einer kontaktlosen Chipkarte zur Verfügung zu stellen, welche bzw. welches eine einfachere Montage des Koppelelementes mit dem Halbleiterchip, und dabei eine hohe Zuverlässigkeit und Lebensdauer der kontaktlosen Chipkarte gewährleistet.

Diese Aufgabe wird durch eine Chipkarte gemäß Anspruch 1 und ein Verfahren zu ihrer Herstellung gemäß Anspruch 12 gelöst.

Die Erfindung ermöglicht eine Reihe von Vorteilen gegenüber den vorbekannten kontaktlosen Chipkarten. Zum einen kann bei einem geringen Justieraufwand das Koppelelement einfacher mit dem Halbleiterchip montiert werden, da die Leiterbahnen und die Kontaktanschlüsse des Koppelelementes auf dem Träger abgestützt werden können. Weiter kann durch die Aufnahme des Halbleiterchips in der Öffnung des Trägers ein Chipkartenmodul bestehend aus Halbleiterchip und Koppelelement mit minimaler Gesamtbauhöhe zur Verfügung gestellt werden. Gegenüber den vorbekannten Anordnungen, bei denen nach der Montage der Halbleiterbauteile in Form von Modulen oder direkt als Chip auf das Koppelelement Erhöhungen stehen bleiben, die mechanischen Beschädigungen ausgesetzt sein können und beim weiteren Aufbau der Chipkarte stören, und aus diesem Grunde den Einsatz von mit Ausstanzungen versehenen Zwischenfolien für den Volumenausgleich beim späteren Laminiervorgang der Chipkarte erfordern, liegen bei der erfindungsgemäßen Anordnung allenfalls vernachlässigbare Erhöhungen im wesentlichen wegen der auf dem abgestützten Träger sehr dünnen Leiterbahnen vor, so daß die weitere Fertigung des Kartenkörpers der Chipkarte ohne den Einsatz volumenausgleichender Zwischenfolien und Zwischenlaminaten erfolgen kann.

Bei einer bevorzugten Ausführung der Erfindung kann von Vorteil vorgesehen sein, daß auf der dem Koppelelement zugewandten Oberfläche des Halbleiterchips im Bereich zwischen den Anschlußelementen des Halbleiterchips eine Isolierschicht aus elektrisch isolierendem Material vorgesehen ist, und wenigstens ein Teil der Leiterbahnen des Koppelelements auf der Isolierschicht des Halbleiterchips abgestützt bzw. frei geführt ist. Auf diese Weise kann die in der Regel ohnehin vorhandene Isolierschicht auf dem Halbleiterchip, welche Isolierschicht beispielsweise aus Polyimid-Material hergestellt ist, gleichzeitig für die elektrische Isolierung der Leiterbahnen des Koppelelementes verwendet werden, wobei die in der Regel streifenförmig ausgebildeten und gegenüber mechanischen Belastungen sehr empfindlichen Leiterbahnen wenigstens teilweise auf der Isolierschicht des Halbleiterchips abgestützt sein können. Von Vorteil ist hierbei, daß die dem Koppelelement zugewandte Oberfläche des Halbleiterchips und die dem Koppelelement zugewandte Oberfläche des Trägers wenigstens annähernd bündig zueinander ausgerichtet sind. Weiterhin ist vorgesehen, daß die Stärke des Trägers und/oder die Tiefe der den Halbleiterchip aufnehmenden Öffnung der Gesamtstärke des Halbleiterchips entspricht. Zur Erhöhung der mechanischen Stabilität und Vergrößerung der Verarbeitungssicherheit kann relativ dickes Trägermaterial mit einer der Halbleiterchipstärke entsprechenden Stärke von beispielsweise etwa 500 µm verwendet werden, so daß der Halbleiterchip selbst nicht gedünnt zu werden braucht, und die Bruchanfälligkeit des Chips in der Karte reduzierte ist. Von Vorteil stellt die den Halbleiterchip aufnehmende Öffnung einen sich über die gesamte Stärke des Trägers erstreckenden Durchbruch dar, welcher vorzugsweise durch eine chemische Ätzung oder eine thermische Zersetzung hergestellt werden kann.

Bei einer besonders bevorzugten Ausführung der Erfindung ist vorgesehen, daß das der elektronischen Schaltung des Halbleiterchips zugeordnete Koppelelement eine oder auch mehrere, insbesondere spiralförmig und flach mit nur wenigen Windungen ausgebildete Induktionsspulen mit gegenüber den äußeren Abmessungen des Halbleiterchips wesentlich größeren Spulenumfängen bzw. Spulendurchmessern aufweist. Bei typischen Grundflächen des Halbleiterchips von etwa 10 mm² liegen die Grundflächen der verwendeten Induktionsspulen im Bereich von etwa 30 bis etwa 40 cm². Die Induktionsspule besitzt hierbei hohe Spulengütewerte im Hochfrequenzbereich, typischerweise Q > 25 bei C = 8 pF und L = 4,2 µH. Die elektrisch wirksame Fläche des Koppelelementes entspricht in diesem Fall von Vorteil annähernd der Gesamtfläche der Chipkarte, so daß hinsichtlich der Größe der Induktionsspule die maximale Kartenfläche ausgenutzt werden kann. Zur vollständigen mechanischen Abstützung der Windungen der Induktionsspule besitzt der Träger einen der Induktionsspule entsprechenden Außenumfang, also wiederum entsprechend der maximal möglichen Kartenfläche.

Der Träger zur Abstützung des Koppelelementes kann von Vorteil aus einem flexiblen Material hergestellt sein, beispielsweise aus einem hochtemperaturstabilen Kunststoffmaterial wie Polyimid. Darüber hinaus kann als Material des Trägers auch Polyethylen oder Polyvinylclorid (PVC) verwendet werden. Weiterhin kann zur Vereinfachung der Justage von Halbleiterchip und Koppelelement der Träger insbesondere auch aus einem transparenten oder wenigstens durchscheinenden Kunststoffmaterial hergestellt sein, beispielsweise aus ABS oder PC/PBT, um einen optischen Zugang beispielsweise für eine Doppelbildkamera zu ermöglichen.

Bei einer weiterhin bevorzugten Ausführung der Erfindung kann vorgesehen sein, daß die Leiterbahnen des Koppelelements die vermittels einem Ätzverfahren hergestellten Windungen der Induktionsspule darstellen. Unter Einsatz von an sich bekannten photolithographischen Verfahren können die Leiterbahnen und Kontaktanschlüsse des Koppelelementes vermittels einem chemischen Ätzverfahren auf einer Spulenfolie aus Kupfer geprintet sein. Die Windungen der streifenförmig ausgebildeten Leiterbahnen der Induktionsspule sind hierbei nebeneinanderliegend und kreuzungsfrei auf der Spulenfolie aus Kupfer angeordnet, wobei die Kontaktanschlüsse der Induktionsspule an den Windungsenden ausgebildet sind.

Von Vorteil ist die Öffnung zur Aufnahme des Halbleiterchips am Randbereich der Chipkarte angeordnet, wo die geringsten Biegebelastungen auftreten und eine maximal zu bearbeitende Karteninnenfläche zur Verfügung gestellt wird.

Zur Erhöhung des mechanischen Schutzes des Halbleiterchips kann auf dem Träger ein Schutzring oder eine Masse mit geeigneter Konsistenz, welche formstabil härtet (beispielsweise sogenanntes Glob Top), eingebracht werden.

Bei der Fertigung der Chipkarte kann bei einer vorteilhaften Ausführung der Erfindung die Öffnung bzw. der Durchbruch im Träger zur Aufnahme des Halbleiterchips nach Fertigstellung der Montage von Träger und Koppelelement hergestellt werden. Nach dem Aufbringen der kupferkaschierten Induktionsspule auf den Träger kann hierbei auf der dem Koppelelement abgewandten Oberfläche des Trägers ganzflächig eine Photolackschicht aufgetragen werden, die zur Ausbildung einer Ätzmaske an der Stelle der anzubringenden Öffnung strukturiert wird. Nach einer chemischen Ätzung des Trägers zur Fertigung der Öffnung bzw. des Durchbruchs wird der Halbleiterchip in die Öffnung eingesetzt und eine elektrische Kontaktierung der Kontaktelemente des Halbleiterchips mit den Kontaktanschlüssen des Koppelelementes vorgenommen. Hierbei kann als Schutz gegen das Ätzmittel zur Herstellung der Öffnung des Trägers das Koppelelement vorab an seiner Unterseite, d.h. der dem Träger zugewandten Seite mit einem ätzsubstanzresistenten Lack versehen sein. Alternativ kann die Öffnung nach dem Aufbringen des Koppelelementes auf den Träger durch chemisches Anlösen des Trägermaterials oder durch thermisches Zersetzen des Trägermaterials gefertigt werden.

Bei einer weiterhin bevorzugten Ausführung des erfindungsgemäßen Verfahrens kann darüber hinaus vorgesehen sein, daß die Öffnung im Träger zur Aufnahme des Halbleiterchips vor der Montage von Träger und Koppelelement hergestellt wird und vorübergehend mit einem mechanisch, chemisch oder thermisch entfernbaren Verschlußmaterial verschlossen wird. Die Öffnung im Träger kann hierbei vorab durch Stanzen, oder auch durch chemische oder thermische Verfahren gefertigt sein. Daran anschließend und noch vor dem Aufbringen der Koppelspule wird die Öffnung in einem folgenden Schritt mit einem mechanisch stabilen, jedoch leicht zu entfernenden Material, vorzugsweise Kunststoffmaterial wie beispielsweise Polymer verschlossen. Nach dem Aufbringen des Koppelelements und Fertigung der Leiterbahnen und Kontaktanschlüsse des Koppelelements vorzugsweise durch strukturiertes Ätzen einer kupferkaschierten Spulenfolie wird der Verschluß beispielsweise auf mechanischem, chemischem oder thermischem Weg entfernt, und der Halbleiterchip montiert. Das Verschlußmaterial kann insbesondere auch ein geeignetes Wachsmaterial darstellen, welches durch thermisches Abschmelzen nach dem Kaschieren und Ätzen der Induktionsspule auf einfache Weise entfernt werden kann, und anschließend der Halbleiterchip in die freie Öffnung des Trägers eingesetzt und mit dem Koppelelement montiert werden kann.

Weitere Merkmale, Vorteile und Zweckmäßigkeiten der Erfindung ergeben sich aus der nachfolgenden Beschreibung eines Ausführungsbeispieles anhand der Zeichnung. Es zeigt:
- Figur 1: eine schematische Schnittansicht eines in die Chipkarte einzusetzenden Chipmoduls bestehend aus Halbleiterchip, Koppelelement, und Träger gemäß einem Ausführungsbeispiel der Erfindung; und
- Figur 2: eine schematische Darstellung der Komponente nach Figur 1 in teilweiser Draufsicht.

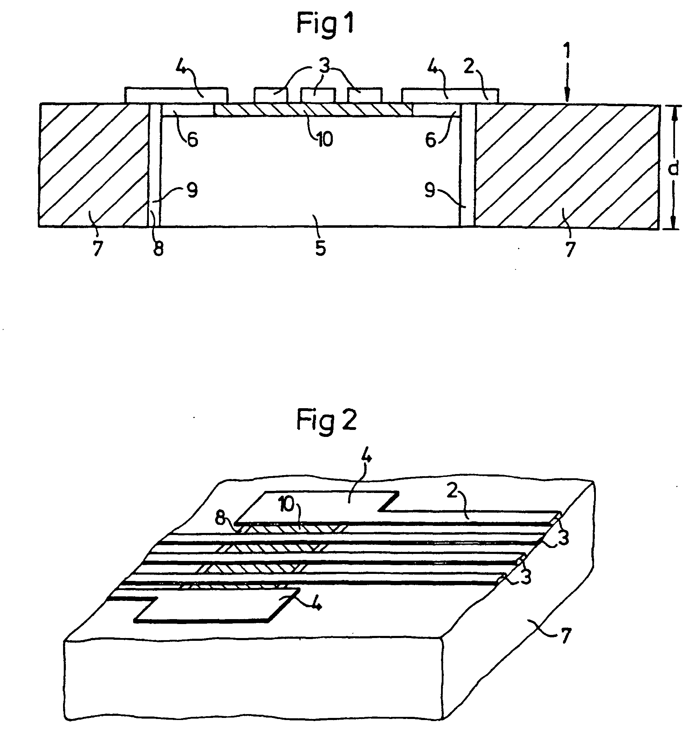

Das in den Figuren 1 und 2 dargestellte Ausführungsbeispiel der Erfindung umfaßt eine Chipkarte 1 zur kontaktlosen Übertragung von elektrischen Signalen an ein (nicht näher dargestelltes) ortsfestes Terminal, d.h. eine sogenannte kontaktlose Chipkarte, welche eine Induktionsspule 2 als Koppelelement mit streifenförmig nebeneinanderliegend, spiralförmig angeordneten Leiterbahnen 3, die die Spulenwindungen darstellen, und mit am Ende jeder Windung ausgebildeten Kontaktanschlüssen 4, die gegenüber der Breite der Leiterbahnen 3 deutlich vergrößerte Abmessungen besitzen. Aus Gründen der besseren Übersichtlichkeit sind in den Figuren 1 und 2 lediglich Teile der Leiterbahnen 3 näher dargestellt; in Wirklichkeit besitzt die Induktionsspule 2 wesentlich größere äußere Abmessungen, die unter Ausnutzung der maximalen Kartenfläche der Chipkarte 1 annähernd den äußeren Abmessungen der Chipkarte entsprechen. Die Induktionsspule 2 kann als separates Bauteil durch Stanzen oder Ätzen einer kupferkaschierten Spulenträgerfolie hergestellt sein. In an sich bekannter Weise wird die (in den Figuren nicht näher dargestellte) kupferkaschierte Spulenträgerfolie mit einer der Struktur der Leiterbahnen 3 und Kontaktanschlüsse 4 entsprechenden Ätzmaske, beispielsweise aus Photolackmaterial, bedeckt und mit einem geeigneten chemischen Ätzmittel behandelt. Die aus Kupfer bestehende Induktionsspule 2 befindet sich in elektrischem Kontakt mit einer in einem Halbleiterchip 5 integriert untergebrachten elektronischen Schaltung, deren Funktionsweise dem Fachmann geläufig ist und daher in den Figuren ebenfalls nicht näher dargestellt ist. Der Halbleiterchip 5 ist auf seiner Oberfläche mit elektrisch leitenden Kontaktelementen 6 (sogenannte Chippads) versehen, die elektrisch und mechanisch mit den Kontaktanschlüssen 4 der Induktionsspule 2 verbunden ist. Zur mechanischen Abstützung der Induktionsspule 2, insbesondere der mechanisch äußerst empfindlichen Leiterbahnen 3 der Induktionsspule 2 ist ein aus Polyimidmaterial hergestellter, einstückiger Träger 7 vorgesehen, der zur Aufnahme des Halbleiterchips 5 mit einer Öffnung 8 versehen ist. Die Abmessungen der Öffnung 8 entsprechen im wesentlichen den Abmessungen des Halbleiterchips 5, so daß dieser vollständig in der Öffnung aufgenommen werden kann. Unter Berücksichtigung der Montagetoleranzen kann die Breite der Öffnung etwas größer ausfallen als die Breite des Halbleiterchips 5, so daß an den Seitenbereichen des Halbleiterchips kleine Resthohlräume 9 verbleiben, die allerdings nicht stören. Die Stärke d des Trägers 7 entspricht genau der Gesamtstärke des Halbleiterchips 5 samt Dicke der Kontaktelemente 6, so daß die dem Koppelelement zugewandte Oberfläche des Halbleiterchips und die dem Koppelelement zugewandte Oberfläche des Trägers 7 im wesentlichen bündig zueinander ausgerichtet sind. Bei gängigen Chipdicken beträgt die Stärke des Trägers etwa 400 bis etwa 500 µm, so daß eine zusätzlich durchzuführende Dünnung des Halbleiterchips entfallen kann. Der Außenumfang des Trägers entspricht fast dem Außenumfang der Induktionsspule 2 und damit im wesentlichen den Abmessungen der Chipkarte selbst, so daß die Induktionsspule 2 vollständig auf dem Träger 7 abgestützt ist. Zwischen den Kontaktelementen 6 ist eine dünne Isolierschicht 10 aus elektrisch isolierendem Material, beispielsweise aus Polyimid vorgesehen, die in der Regel ohnehin auf dem separat gefertigten Halbleiterchip angeordnet ist und bei der erfindungsgemäßen Anordnung als elektrisch isolierende Stützschicht für den auf dem Halbleiterchip 5 verlaufenden Teil der Leiterbahnen der Induktionsspule 2 verwendet wird. Der Halbleiterchip 5 liegt somit bündig in der Öffnung 8, über welche die Leiterbahnen 3 der Induktionsspulen geführt sind. Die Induktionsspule 2 wird mit einer an sich bekannten direkten Verbindungstechnik wie beispielsweise vermittels Thermokompression oder sogenannter Flip-Chip-Montage an den relativ breiten Kontaktelementen 6 bzw. Kontaktierpads mit dem Halbleiterchip 5 kontaktiert und befestigt. Die gesamte Anordnung des erfindungsgemäßen Chipmoduls bestehend aus Halbleiterchip 5, Träger 7 und Induktionsspule 2 besitzt gegenüber den vorbekannten Anordnungen eine im wesentlichen planare Oberfläche und kann daher bei der weiteren Kartenherstellung ohne den Einsatz zusätzlicher Zwischenfolien und dergleichen der Laminierung mit den weiteren Bestandteilen des Kartenkörpers zugeführt werden. Gegenüber der Gesamtstärke des Trägers 7 bzw. des Halbleiterchips 5 kann die insbesondere in Figur 1 insoweit übertrieben dargestellte Dicke der Leiterbahnen 3 bzw. der Kontaktanschlüsse 4 vernachlässigt werden.

### Bezugszeichenliste

- 1: Chipkarte
- 2: Induktionsspule
- 3: Leiterbahnen
- 4: Kontaktanschlüsse
- 5: Halbleiterchip
- 6: Kontaktelemente
- 7: Träger
- 8: Öffnung
- 9: Resthohlräume
- 10: Isolierschicht

## Patentansprüche

1. Chipkarte zur kontaktlosen Übertragung von elektrischen Signalen an ein Terminal, wobei die Chipkarte enthält:
- einen Kartenkörper und einen Halbleiterchip, wobei
-- der Kartenkörper ein Koppelelement (2)aufweist, welches Leiterbahnen (3) und Kontaktanschlüsse (4) aufweist, und
-- der Halbleiterchip (5) mit einer mit dem Koppelelement verbundenen elektronischen Schaltung integriert ausgebildet ist,
-- der Halbleiterchip (5) auf seiner Oberfläche mit Kontaktelementen (6) für die direkte elektrische Verbindung der elektronischen Schaltung mit den Kontaktanschlüssen (4) des Koppelelementes (2) versehen ist,
-- ein wenigstens einen Teil der Leiterbahnen (3) und die Kontaktanschlüsse (4) des Koppelelementes (2) abstützender Träger (7) aus einem elektrisch isolierenden Material vorgesehen ist und wobei
--- der Träger (7) im Bereich der Kontaktanschlüsse (4) des Koppelelementes (2) mit einer den Abmessungen des Halbleiterchips (5) entsprechend geformten Öffnung (8) zur Aufnahme des Halbleiterchips (5) versehen ist, über welche die Leiterbahnen (3) des Koppelelementes (2) geführt sind.

2. Chipkarte nach Anspruch 1, **dadurch gekennzeichnet, daß** auf der dem Koppelelement (2) zugewandten Oberfläche des Halbleiterchips (5) im Bereich zwischen den Anschlußelementen des Halbleiterchips (5) eine Isolierschicht (10) aus elektrisch isolierendem Material vorgesehen ist, und wenigstens ein Teil der über die Öffnung (8) geführten Leiterbahnen (3) des Koppelelements (2) auf der Isolierschicht (10) des Halbleiterchips (5) abgestützt oder frei geführt ist.

3. Chipkarte nach Anspruch 1 oder 2, **dadurch gekennzeichnet, daß** die dem Koppelelement (2) zugewandte Oberfläche des Halbleiterchips (5) und die dem Koppelelement (2) zugewandte Oberfläche des Trägers (7) wenigstens annähernd bündig zueinander ausgerichtet sind.

4. Chipkarte nach Anspruch 1 bis 3, **dadurch gekennzeichnet, daß** die Stärke (d) des Trägers (7) und/oder die Tiefe der den Halbleiterchip (5) aufnehmenden Öffnung (8) der Gesamtstärke des Halbleiterchips (5) entspricht.

5. Chipkarte nach Anspruch 1 bis 4, **dadurch gekennzeichnet, daß** das der elektronischen Schaltung des Halbleiterchips (5) zugeordnete Koppelelement (2) wenigstens eine Induktionsspule (2) mit einem gegenüber den äußeren Abmessungen des Halbleiterchips (5) wesentlich größeren Spulenumfang aufweist, und der Außenumfang des Trägers (7) im wesentlichen dem Umfang der Spule entsprechend ausgebildet ist.

6. Chipkarte nach Anspruch 1 bis 5, **dadurch gekennzeichnet, daß** die Leiterbahnen (3) des Koppelelements (2) die vermittels einem Ätzverfahren hergestellten Windungen der Induktionsspule (2) darstellen.

7. Chipkarte nach Anspruch 1 bis 6, **dadurch gekennzeichnet, daß** der das Koppelelement (2) abstützende Träger (7) aus elektrisch isolierendem Material eine Folie mit ebenmäßigen Oberflächen darstellt.

8. Chipkarte nach Anspruch 1 bis 7, **dadurch gekennzeichnet, daß** das Material des Trägers (7) ein temperaturstabiles, flexibles Kunststoffmaterial, insbesondere ein Polyimidmaterial aufweist.

9. Chipkarte nach Anspruch 1 bis 8, **dadurch gekennzeichnet, daß** die elektrisch wirksame Fläche des Koppelelementes (2) wenigstens annähernd der Gesamtfläche der Chipkarte (1) entspricht.

10. Chipkarte nach Anspruch 1 bis 9, **dadurch gekennzeichnet, daß** die Öffnung zur Aufnahme des Halbleiterchips (5) am Randbereich der Chipkarte (1) angeordnet ist.

11. Chipkarte nach Anspruch 5 bis 10, **dadurch gekennzeichnet, daß** die Windungen der streifenförmig ausgebildeten Leiterbahnen (3) der Induktionsspule (2) nebeneinander liegend und kreuzungsfrei auf dem Träger (7) angeordnet sind, und die Kontaktanschlüsse (4) an den Windungsenden der Induktionsspule (2) ausgebildet sind.

12. Verfahren zur Herstellung einer Chipkarte (1) zur kontaktlosen Übertragung von elektrischen Signalen an ein Terminal, wobei
- die Chipkarte einen Kartenkörper aufweist, in welchem ein Koppelelement (2), welches Leiterbahnen (3) und Kontaktanschlüsse (4) aufweist, vorgesehen ist und wobei
- ein Halbleiterchip (5) mit einer dem Koppelelement (2) zugeordneten elektronischen Schaltung integriert ausgebildet wird, wobei
-- der Halbleiterchip (5) auf seiner Oberfläche mit Kontaktelementen (6) für die elektrische Verbindung der elektronischen Schaltung mit den Kontaktanschlüssen (4) des Koppelelementes (2) versehen wird, und
-- ein wenigstens einen Teil der Leiterbahnen (3) und die Kontaktanschlüsse (4) des Koppelelementes (2) abstützender Träger (7) aus einem elektrisch isolierenden Material vorgesehen wird,
mit den Schritten:
- Herstellen einer Öffnung in dem Träger (7) im Bereich der Kontaktanschlüsse (4) des Koppelelementes (2),
- Einsetzen des Halbleiterchips (5) in die Öffnung des Trägers (7) derart, daß die Kontaktelemente (6) des Halbleiterchips (5) den Kontaktanschlüssen (4) zugewandt sind und die Leiterbahnen (3) des Koppelelementes (2) über der Öffnung geführt sind, und
- Verbinden der Kontaktelemente (6) des Halbleiterchips (5) mit den Kontaktanschlüssen (4) des Koppelelementes (2).

13. Verfahren nach Anspruch 12, **dadurch gekennzeichnet, daß** die Öffnung (8) im Träger (7) zur Aufnahme des Halbleiterchips (5) durch einen chemischen Ätzschritt hergestellt wird.

14. Verfahren nach Anspruch 12 oder 13, **dadurch gekennzeichnet, daß** die Öffnung im Träger (7) zur Aufnahme des Halbleiterchips (5) nach Fertigstellung der Montage von Träger (7) und Koppelelement (2) hergestellt wird.

15. Verfahren nach Anspruch 12 oder 13, **dadurch gekennzeichnet, daß** die Öffnung im Träger (7) zur Aufnahme des Halbleiterchips (5) vor der Montage von Träger (7) und Koppelelement (2) hergestellt wird und vorübergehend mit einem mechanisch, chemisch oder thermisch entfernbaren Verschlußmaterial verschlossen wird.

16. Verfahren nach Anspruch 12 bis 15, **dadurch gekennzeichnet, daß** die Kontaktanschlüsse (4) des Koppelelementes (2) vermittels einer direkten Verbindungstechnik mit den Anschlußelementen des Halbleiterchips (5) kontaktiert und befestigt werden.

17. Verfahren nach Anspruch 12 bis 16, **dadurch gekennzeichnet, daß** auf der dem Koppelelement (2) zugewandten Oberfläche des Halbleiterchips (5) im Bereich zwischen den Anschlußelementen des Halbleiterchips (5) eine Isolierschicht (10) aus elektrisch isolierendem Material vorgesehen wird, und wenigstens ein Teil der über die Öffnung (8) geführten Leiterbahnen (3) des Koppelelements (2) auf der Isolierschicht des Halbleiterchips (5) abgestützt bzw. frei geführt wird.

18. Verfahren nach Anspruch 12 bis 17, **dadurch gekennzeichnet, daß** die dem Koppelelement (2) zugewandte Oberfläche des Halbleiterchips (5) und die dem Koppelelement (2) zugewandte Oberfläche des Trägers (7) wenigstens annähernd bündig zueinander ausgerichtet werden.

19. Verfahren nach Anspruch 12 bis 18, **dadurch gekennzeichnet, daß** die Öffnung (8) zur Aufnahme des Halbleiterchips (5) am Randbereich der Chipkarte (1) angeordnet wird.

## Claims

1. Smart card for the contactless transmission of electric signals to a terminal, the smart card including:
-- a card body and a semiconductor chip,
-- the card body having a coupling element (2), which has conductor tracks (3) and contact connections (4), and
-- the semiconductor chip (5) having an electronic circuit connected to the coupling element being constructed in an integrated manner,
-- the semiconductor chip (5) being provided on its surface with contact elements (6) for the direct electrical connection of the electronic circuit to the contact connections (4) of the coupling element (2),
-- a carrier (7) is provided which is made of an electrically insulating material and supports at least some of the conductor tracks (3) and the contact connections (4) of the coupling element (2) and,
-- the carrier (7) in the region of the contact connections (4) of the coupling element (2), being provided with an aperture (8) which is shaped in accordance with the dimensions of the semiconductor chip (5) and serves to receive the semiconductor chip (5), and over which the conductor tracks (3) of the coupling element (2) are passed.

2. Smart card according to Claim 1, **characterized in that**, on that surface of the semiconductor chip (5) which faces the coupling element (2), in the region between the connecting elements of the semiconductor chip (5), an insulating layer (10) of electrically insulating material is provided, and at least some of the conductor tracks (3) passed over the opening (8), of the coupling element (2) are supported or freely guided on the insulating layer (10) of the semiconductor chip (5).

3. Smart card according to Claim 1 or 2, **characterized in that** that surface of the semiconductor chip (5) which faces the coupling element (2), and that surface of the carrier (7) which faces the coupling element (2), are aligned at least approximately flush with one another.

4. Smart card according to Claims 1 to 3, **characterized in that** the thickness (d) of the carrier (7) and/or the depth of the aperture (8) receiving the semiconductor chip (5) corresponds to the overall thickness of the semiconductor chip (5).

5. Smart card according to Claims 1 to 4, **characterized in that** the coupling element (2) which is assigned to the electronic circuit of the semiconductor chip (5) has at least one induction coil (2) having a coil periphery which is substantially larger than the external dimensions of the semiconductor chip (5), and the external periphery of the carrier (7) is designed essentially to correspond to the periphery of the coil.

6. Smart card according to Claims 1 to 5, **characterized in that** the conductor tracks (3) of the coupling element (2) constitute the turns of the induction coil (2), which are made by means of an etching process.

7. Smart card according to Claims 1 to 6, **characterized in that** the carrier (7) of electrically insulating material, which supports the coupling element (2), constitutes a foil with even surfaces.

8. Smart card according to Claims 1 to 7, **characterized in that** the material of the carrier (7) has a temperature-stable, flexible plastic material, in particular a polyimide material.

9. Smart card according to Claims 1 to 8, **characterized in that** the electrically active area of the coupling element (2) corresponds at least approximately to the total area of the smart card (1).

10. Smart card according to Claims 1 to 9, **characterized in that** the aperture to receive the semiconductor chip (5) is arranged at the edge region of the smart card (1).

11. Smart card according to Claims 5 to 10, **characterized in that** the turns of the conductor tracks (3), which are of strip-shaped construction, of the induction coil (2) are arranged lying alongside one another and without crossing on the carrier (7), and the contact connections (4) are constructed at the ends of the turns of the induction coil (2).

12. Method of manufacturing a smart card (1) for the contactless transmission of electric signals to a terminal,
-- the smart card having a card body in which a coupling element (2), which has conductor tracks (3) and contact connections (4), is provided and
-- a semiconductor chip (5) having an electronic circuit assigned to the coupling element (2) being constructed in an integrated manner,
-- the semiconductor chip (5) being provided on its surface with contact elements (6) for the electrical connection of the electronic circuit to the contact connections (4) of the coupling element (2), and
-- a carrier (7) being provided which is made of an electrically insulating material and supports at least some of the conductor tracks (3) and the contact connections (4) of the coupling element (2), having the steps:
-- making of an aperture in the carrier (7) in the region of the contact connections (4) of the coupling element (2),
- the insertion of the semiconductor chip (5) into the aperture in the carrier (7) in such a way that the contact elements (6) of the semiconductor chip (5) face the contact connections (4) and the conductor tracks (3) of the coupling element (2) are routed through the opening, and
- the connection of the contact elements (6) of the semiconductor chip (5) to the contact connections (4) of the coupling element (2).

13. Method according to Claim 12, **characterized in that** the aperture (8) in the carrier (7) for receiving the semiconductor chip (5) is made by means of a chemical etching step.

14. Method according to Claim 12 or 13, **characterized in that** the aperture in the carrier (7) for receiving the semiconductor chip (5) is made after the completion of the assembly of carrier (7) and coupling element (2).

15. Method according to Claim 12 or 13, **characterized in that** the aperture in the carrier (7) for receiving the semiconductor chip (5) is made before the assembly of carrier (7) and coupling element (2), and is temporarily closed with a closure material which can be removed mechanically, chemically or thermally.

16. Method according to Claims 12 to 15, **characterized in that** the contact connections (4) of the coupling element (2) are contacted and fastened to the connection elements of the semiconductor chip (5) using a direct connection technique.

17. Method according to Claims 12 to 16, **characterized in that** on that surface of the semiconductor chip (5) which faces the coupling element (2), in the region between the connecting elements of the semiconductor chip (5), an insulating layer (10) of electrically insulating material is provided, and at least some of the conductor tracks (3), passed over the opening (8), of the coupling element (2) are supported or freely guided on the insulating layer of the semiconductor chip (5).

18. Method according to Claims 12 to 17, **characterized in that** that surface of the semiconductor chip (5) which faces the coupling element (2), and that surface of the carrier (7) which faces the coupling element (2), are aligned at least approximately flush with each other.

19. Method according to Claims 12 to 18, **characterized in that** the aperture (8) to receive the semiconductor chip (5) is arranged at the edge region of the smart card (1).

## Revendications

1. Carte à puce pour la transmission sans contact de signaux électriques à un terminal, la carte à puce comprenant :
- un corps de carte et une puce à semi-conducteur,
-- le corps de carte comportant un élément (2) de couplage qui comporte des pistes (3) conductrices et des bornes (4) de contact, et
-- la puce (5) à semi-conducteur étant réalisée de manière intégrée avec un circuit électronique relié à l'élément de couplage,
-- la puce (5) à semi-conducteur étant munie à sa surface d'éléments (6) de contact pour la liaison électrique directe du circuit électronique avec les bornes (4) de contact de l'élément (2) de couplage,
-- un support (7) en un matériau isolant du point de vue électrique, soutenant au moins une partie des pistes (3) conductrices, et les bornes de contact de l'élément (2) de couplage, et
--- le support (7) étant muni dans la région des bornes (4) de contact de l'élément (2) de couplage d'une ouverture (8), formée suivant les dimensions de la puce (5) à semi-conducteur, pour la réception de la puce (5) à semi-conducteur, les pistes (3) conductrices de l'élément de couplage passant sur cette ouverture.

2. Carte à puce suivant la revendication 1, **caractérisée en ce qu'**il est prévu à la surface de la puce (5) à semi-conducteur tournée vers l'élément de couplage, dans la région entre les éléments de borne de la puce (5) à semi-conducteur, une couche (10) d'isolation en un matériau isolant du point de vue électrique, et **en ce qu'**au moins une partie des pistes (3) semiconductrices de l'élément (2) de couplage passant sur l'ouverture (8) sont soutenues ou passent librement sur la couche (10) d'isolation de la puce (5) à semi-conducteur.

3. Carte à puce suivant la revendication 1 ou 2, **caractérisée en ce que** la surface de la puce (5) à semi-conducteur tournée vers l'élément (2) de couplage et la surface du support (7) tournée vers l'élément (2) de couplage sont orientées au moins à peu près en affleurement l'une par rapport à l'autre.

4. Carte à puce suivant la revendication 1 à 3, **caractérisée en ce que** l'épaisseur (d) du support (7) et/ou la profondeur de l'ouverture (8) recevant la puce (5) à semi-conducteur correspond à l'épaisseur totale de la puce (5) à semi-conducteur.

5. Carte à puce suivant la revendication 1 à 4, **caractérisée en ce que** l'élément (2) de couplage associé au circuit électronique de la puce (5) à semi-conducteur comporte au moins une bobine (2) d'induction ayant une circonférence de bobine sensiblement plus grande que les dimensions extérieures de la puce (5) à semi-conducteur, et **en ce que** la circonférence extérieure du support (7) est réalisée d'une manière correspondant sensiblement au pourtour de la bobine.

6. Carte à puce suivant la revendication 1 à 5, **caractérisée en ce que** les pistes (3) conductrices de l'élément (2) de couplage représentent les spires de la bobine (2) d'induction produites au moyen d'un procédé d'attaque chimique.

7. Carte à puce suivant la revendication 1 à 6, **caractérisée en ce que** le support (7) en un matériau isolant du point de vue électrique soutenant l'élément (2) de couplage, représente une feuille à surfaces uniformes.

8. Carte à puce suivant la revendication 1 à 7, **caractérisée en ce que** le matériau du support (7) comporte un matériau en matière plastique souple, stable en température, notamment un matériau à base de polyimide.

9. Carte à puce suivant la revendication 1 à 8, **caractérisée en ce que** la surface active du point de vue électrique de l'élément (2) de couplage correspond au moins à peu près à la surface totale de la carte (1) à puce.

10. Carte à puce suivant la revendication 1 à 9, **caractérisée en ce que** l'ouverture pour la réception de la puce (5) à semi-conducteur est ménagée dans la région de bord de la carte (1) à puce.

11. Carte à puce suivant la revendication 5 à 10, **caractérisée en ce que** les spires des pistes (3) conductrices, réalisées en forme de bandes, de la bobine (2) d'induction sont disposées côte à côte et sans intersection sur le support (7), et **en ce que** les bornes (4) de contact sont réalisées aux extrémités des spires de la bobine (2) d'induction.

12. Procédé de fabrication d'une carte (1) à puce pour la transmission sans contact de signaux électriques à un terminal,
- la carte à puce comportant un corps de carte dans lequel un élément (2) de couplage comporte des pistes (3) conductrices et des bornes (4) de contact et
- une puce (5) à semi-conducteur étant réalisée de manière intégrée en ayant un circuit électronique associé à l'élément (2) de couplage,
-- la puce (5) à semi-conducteur étant munie à sa surface d'éléments (6) de contact pour la liaison électrique du circuit électronique avec les bornes (4) de contact de l'élément (2) de couplage, et
-- un support (7) en un matériau isolant du point de vue électrique soutenant au moins une partie des pistes (3) conductrices et les bornes (4) de contact de l'élément (2) de couplage, étant prévu, comportant les étapes :
- on produit une ouverture dans le support (7) dans la région des bornes (4) de contact de l'élément (2) de couplage,
- on introduit la puce (5) à semi-conducteur dans l'ouverture du support (7) de telle manière que les éléments (6) de contact de la puce (5) à semi-conducteur sont tournés vers les bornes (4) de contact et les pistes (3) conductrices de l'élément (2) de couplage passent au-dessus de l'ouverture, et
- on relie les éléments (6) de contact de la puce (5) à semi-conducteur aux bornes (4) de contact de l'élément (2) de couplage.

13. Procédé suivant la revendication 12, **caractérisé en ce que** l'on produit l'ouverture (8) dans le support (7) pour recevoir la puce (5) à semi-conducteur par une étape d'attaque chimique.

14. Procédé suivant la revendication 12 ou 13, **caractérisé en ce que** l'on produit l'ouverture dans le support (7) pour la réception de la puce (5) à semi-conducteur après que l'on a fini le montage du support (7) et de l'élément (2) de couplage.

15. Procédé suivant la revendication 12 ou 13, **caractérisé en ce que** l'on produit l'ouverture dans le support (7) pour la réception de la puce (5) à semi-conducteur avant le montage du support (7) et de l'élément (2) de couplage et on ferme l'ouverture provisoirement par un matériau de fermeture pouvant être enlevé mécaniquement, chimiquement ou thermiquement.

16. Procédé suivant la revendication 12 à 15, **caractérisé en ce que** l'on met en contact les bornes (4) de contact de l'élément (2) de couplage au moyen d'une technique de liaison directe avec les éléments de borne de la puce (5) à semi-conducteur et on les y fixe.

17. Procédé suivant la revendication 12 à 16, **caractérisé en ce qu'**il est prévu, à la surface de la puce (5) à semi-conducteur tournée vers l'élément (2) de couplage, dans la région entre les éléments de borne de la puce (5) à semi-conducteur, une couche (10) d'isolation en un matériau isolant du point de vue électrique, et **en ce qu'**au moins une partie des pistes (3) conductrices de l'élément (2) de couplage qui passent sur l'ouverture (8) sont soutenues ou passent librement sur la couche d'isolation de la puce (5) à semi-conducteur.

18. Procédé suivant la revendication 12 à 17, **caractérisé en ce que** la surface de la puce (5) à semi-conducteur tournée vers l'élément (2) de couplage et la surface du support (7) tournée vers l'élément (2) de couplage sont orientées au moins à peu près en affleurement l'une par rapport à l'autre.

19. Procédé suivant la revendication 12 à 18, **caractérisé en ce que** l'ouverture (8) pour la réception de la puce (5) à semi-conducteur est ménagée dans la région de bord de la carte (1) à puce.
